# EUROPEAN PATENT APPLICATION

(11) **EP 4 174 455 A1**
(43) Date of publication of application: **03.05.2023**
(21) Application number: 21205117.1
(22) Date of filing: 27.10.2021
(51) Int. Cl.: G01F 23/28, B08B 17/02, G02B 27/00, G01N 21/15

(54) **DEVICE TO PROTECT OPTICAL SENSOR SURFACES FROM DUST ACCUMULATION**

(71) Applicant: Terabee S.A.S., 01630 Saint-Genis Pouilly (FR)
(72) Inventor: RUFFO, Massimiliano, 1224 Chêne-Bougerie (CH); KOVERMANN, Jan W., 01630 St. Genis-Pouilly (FR)
(74) Representative: Weihs, Bruno Konrad

(57) **Abstract**

The invention provides a flexible skirt system configured to prevent dust material inside a silo to contaminate a sensor mounted inside of the silo and configured to measure a fill level. The sensor comprises at least an active surface configured to emit and receive a signal in a field of view to measure the fill level, the sensor being mounted on or in proximity of a ceiling the silo. The flexible skirt system further comprises a flexible pipe-like skirt attached to a basis and around the sensor and configured to extend in direction of gravity force, configured to be deformed by an air movement around the flexible pipe-like skirt in such a way that the flexible pipe-like skirt is folded or pinched off by twisting or folding, thus preventing an ingress of the dust material into the flexible pipe-like skirt thereby preventing contamination of the active surface.

## Description

### Technical field

The invention is in the field of optical detectors used in a silo-type of environment, more articularly in the field of technology to maintain optical parts of the optical detectors free of contamination from material present in the silo.

### Background

A silo is commonly known as a tall tower, usually with a domed roof, that is used to store grain, etc., for farm animals. In other industries, silos are also used for example with cement for construction, lime powder for water treatment etc.

Silos are used to store many kinds of different materials in powder, granular or mixed form. Most of those materials can create airborne dust when manipulated or transported. This dust can stick to surfaces inside the silo.

Silos can be filled in different ways. Commonly, lighter powder materials are blown into the silo using an air stream to carry the material, but also mechanical solutions like conveyor belts and screws are used. In all cases, significant air movement inside the silo is observed together with high amounts of airborne dust.

The volume (and indirectly weight) of the material stored in a silo is of interest for the user of the silo. If the fill level and the geometry of the silo is known, the volume can be calculated directly.

The fill level can be measured using different techniques that allow for contactless distance sensing, these include optical techniques (time of flight, triangulation), acoustic techniques (ultrasound) and electromagnetic techniques (radar). All sensors need an active surface inside the silo in order to operate correctly.

In the case of dust accumulation on the active surface of the sensors, false measurements are possible up to the point where the sensor cannot measure anymore. The amount of dust that is needed to disturb the measurements is dependent on the sensor technology, but cleaning is required for all of them to recover to normal functioning.

Sensor cleaning can be done manually or automatic. Manual cleaning is usually done as a part of regular maintenance. Automatic cleaning is usually integrated with the sensor and can be done using either a wiper to wipe off the dust, pressurized air to blow off the dust or vibrations to shake off the dust layer. The success of cleaning technology depends highly on the material and the mechanism of adhesion. In addition, all those technologies need a power source. This prevents the construction of compact, battery powered devices with automatic cleaning and long battery life.

International publication WO2020/102879A1 describes an example of a LIDAR sensor for use in an agricultural feed bin monitoring system, with one or more quartz glass lenses, and a wiper system to clean the one or more lenses by being rotated by a servo or other type of electric motor.

### Summary of the invention

The invention provides a flexible skirt system configured to prevent dust material inside a silo to contaminate a sensor mounted inside of the silo and configured to measure a fill level. The sensor comprises at least an active surface configured to emit and receive a signal in a field of view to measure the fill level, the sensor being mounted on or in proximity of a ceiling the silo. The flexible skirt system further comprises a flexible pipe-like skirt attached to a basis and around the sensor and configured to extend in direction of gravity force, configured to be deformed by an air movement around the flexible pipe-like skirt in such a way that the flexible pipe-like skirt is folded or pinched off by twisting or folding, thus preventing an ingress of the dust material into the flexible pipe-like skirt thereby preventing contamination of the active surface.

In a preferred embodiment, the flexible skirt system further comprises a rigid lamp shade-like cover which on one of its extremities is fixed to the sensor and on the opposite one of its extremities carries the flexible pipe-like skirt of the flexible skirt system, thereby tensioning the flexible pipe-like skirt to remain open like a tunnel.

In a further preferred embodiment, the flexible pipe-like skirt comprises a skirt material that is configured to be flexible and to form the flexible pipe-like skirt as anyone of the list comprising a cylinder, any closed geometrical shape, a set of overlapping strips.

In an even further preferred embodiment, the flexible skirt system further comprises a weight fixed towards the extremity away from the sensor of the flexible pipe-like skirt and configured to assure that the flexible pipe-like skirt takes back the original unfolded and un-pinched shape in the absence of any air movement.

In an even further preferred embodiment, a cross-section of the flexible pipe-like skirt may be any one of the list comprising cylindrical, conical, mushroom shaped, a more complex 3D shape.

In an even further preferred embodiment, the flexible pipe-like skirt comprises at least a fin on its outer periphery, the at least one fin configured to increase a probability of a sealing pinch-off of the flexible pipe-like skirt by turbulent air movement.

In an even further preferred embodiment, the flexible pipe-like skirt comprises on an inner side of the skirt a cleaning material configured to exert a cleaning effect, meaning once bent in contact with the active surface of the sensor by an air turbulence it removes already attached dust material.

### Brief description of the figures

The invention will be better understood through the detailed description of preferred embodiments of the invention, and in reference to the appended drawings, wherein
figure 1 schematically illustrates an example embodiment of the system according to the invention;
figure 2 illustrates a sequence of events to explain the workings of the invention according to an example embodiment;
figure 3 illustrates a full application setup according to an example embodiment of the invention;
figure 4 illustrates an embodiment of the flexible skirt according to an example of the invention; and
figure 5 schematically illustrates a sensor as used with the flexible skit according to an example embodiment of the invention.

### Detailed description of preferred embodiments of the invention

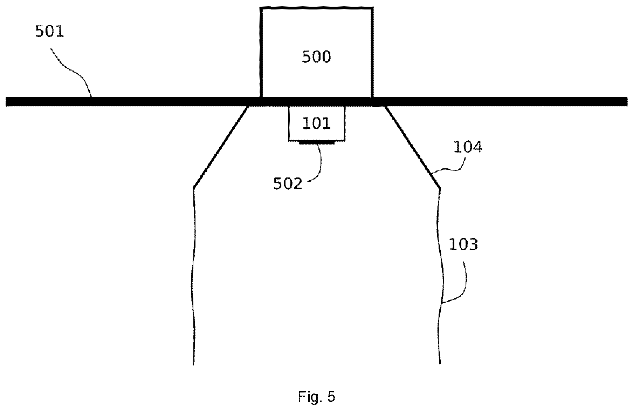

Figure 5 illustrates a typical example configuration for a detector, its sensor, and an active surface of the sensor, wherein reference 500 is an optical sensor's 101 power supply and communication unit; reference 501 is a hull of the silo; and reference 502 is an optical active surface of the optical sensor 101.

Since a substantive part of the dust accumulation on the active surface of the sensor happens during the silo filling process, the inventors have devised a method and system that use an inherently present air movement inside the silo at the time of the filling process, to protect and potentially clean the active surface of the sensor.

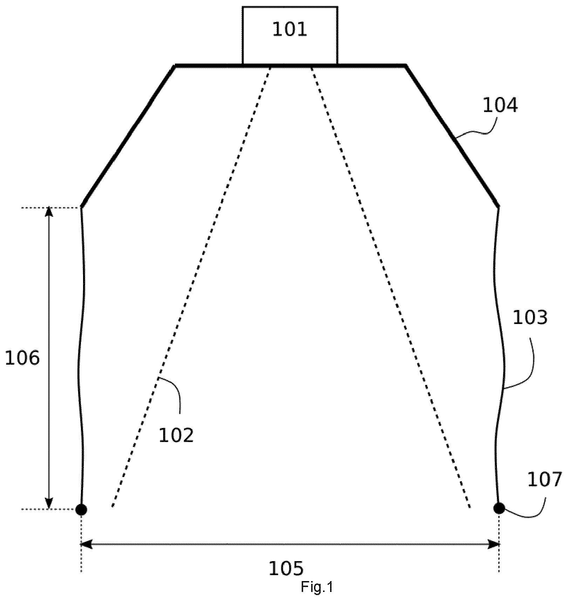

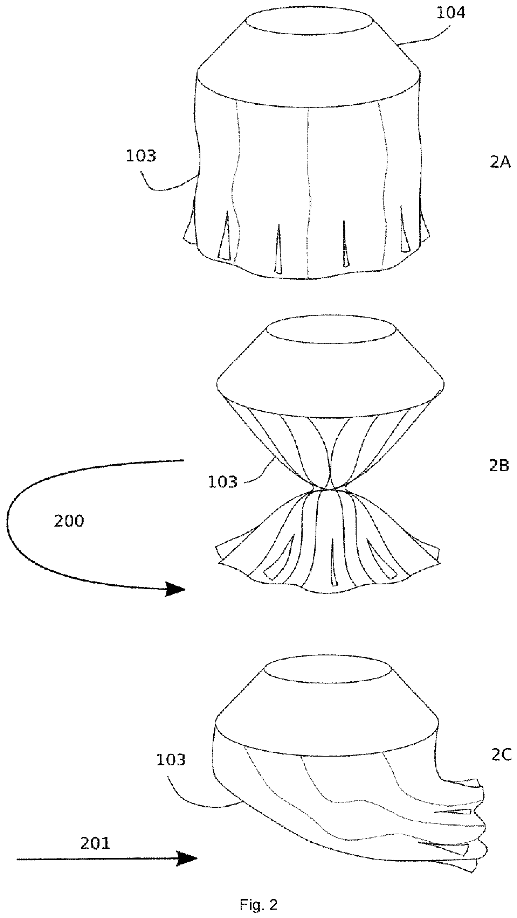

Referring to figure **1****,** this illustrates an example embodiment of the system according to the invention. The sensor **101** may be used to measure the fill level inside a silo (not represented in figure **1****).** The sensor **101** may be configured to measure using for example one of the following different techniques that allow for contactless distance sensing: optical techniques such as time of flight and triangulation; acoustic techniques involving for example ultrasound; electromagnetic techniques such as for example radar technique. The sensor **101** comprises an active surface (not illustrated in figure **1****)** located inside the silo on or in proximity of a ceiling of the silo (silo not illustrated in figure **1****)** in order to operate correctly in measuring the fill level. A flexible pipe-like skirt system **103** is arranged around and below the active surface of the sensor **101.** In this manner, the active surface of the sensor **101** may look through the pipe-like tunnel delimited by the flexible skirt **system103,** for example according through a cone-shaped field of view **102.** During normal operation of the sensor **101,** i.e., outside of a period during which the silo is filled, the flexible skirt system **103** is kept hanging straight down by gravity, as illustrated in figure 1 and in figure 2A. The flexible skirt system **103** may comprise a rigid lamp shade-like cover **104** which on one of its extremities is fixed to the sensor **101** and on the opposite one of its extremities caries the flexible pipe-like skirt of the flexible skirt system **103,** thereby tensioning the flexible pipe-like skirt to remain open like a tunnel.

In preferred embodiments, a longitudinal cross-section of the flexible skirt system **103** may for example be cylindrical, conical, or mushroom shaped. It may also have more complex 3-dimensional shapes that may include fins formed into the shape.

Preferably, a diameter **105** and a length **106** of the flexible pipe-like skirt in the flexible skirt **103** are chosen in a way that no obstruction of the sensor signal occurs inside the field of view **102** of the sensor **101** and that no parasitic reflection (not illustrated in figure **1**), e.g., a reflection on an inner side of the flexible skirt system **103,** may alter the measurement results. The length **106,** a tissue weight, a tissue type and a potential bottom weight - this is a "linear weight" that keeps the skirt hanging down and helps to unwind it after the air movement stops - have to be chosen in such a way that during the occurrence of turbulence or air streams, such as a the time of filling the silo, the flexible pipe-like skirt of the flexible skirt system **103** is twisted as illustrated in figure **2B** or bent as illustrated in figure **2C****,** and will therefore not allow any dust (dust not illustrated in figures **2B** and **2C**) to arrive at the active surface of the sensor (both active surface and sensor not illustrated in figures **2B** and **2C**). Hence for example, it has been found that the flexible pipe-like skirt of the flexible skirt system **103** needs to be longer than its diameter and that the tissue weight and bottom weight need to be chosen such that it unfolds into its original shape when the air movement stops independently of the type of deformation. Further it seems that length of the flexible pipe-like skirt of the flexible skirt system **103** should not exceed twice the diameter to avoid potential knots. The situation illustrated in figure **2B** occurs when a wind in the silo at the level of the flexible skirt **103** as a circular direction according to arrow **200,** while the situation illustrated in figure **2C** occurs when the wind in the silo at the level of the flexible skirt has a linear direction, coming from a side of the flexible skirt system **103** according to arrow **201.**

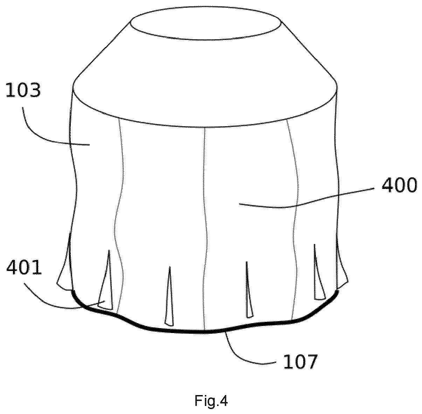

In a preferred embodiment, and as illustrated in figures **1** and **4** a bottom ring **107** may be mounted around the flexible pipe-like skirt of the flexible skirt system **103** to avoid knots. The bottom ring **107** may be rigid or flexible by either choosing flexible ring material or by segmenting a rigid ring with flexible joints. The bottom ring **107** is configured such that at the moment the air movement stops, the bottom ring **107** will take back its initial shape by gravity and in case of a flexible ring material, by gravity and the restoring force of the flexible ring material.

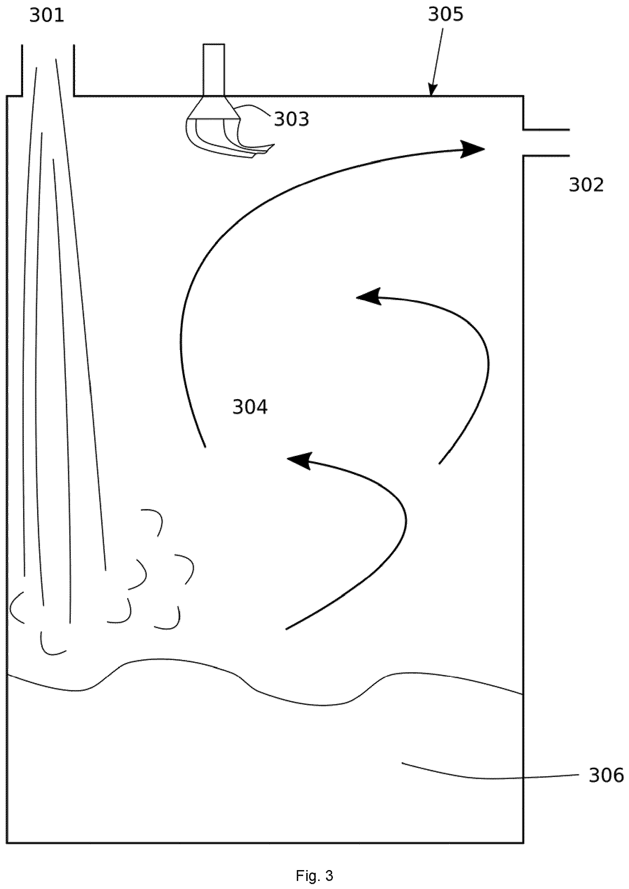

Figure **3** illustrates an example of a full application setup in a silo **305** that is used to store a material **306:** during a silo filling operation, the material **306** is blown into the silo **305** from a top entry **301** of the silo **305** using a strong airflow that carries with it the material **306** to be stored in the silo **305.** Due to the fixed volume of the silo **305,** the air has to escape from the silo using an escape valve **302** situated also on the top of the silo **305.** Due to the inner shape of the silo **305** and the constantly changing fill level, an air flow **304** inside the silo **305** can with good approximation be called turbulent. Once the air flow **304** hits the sensor with the skirt attached **303,** the skirt will deform by either twisting or bending as shown in the example illustrations in figures **2B** and **2C****.** This will close the pipe-like tunnel and little to no dust will arrive at the active surface of the sensor (not illustrated in figure 3). In case of a laminar flow, the twist or bent shape will stay unchanged during the filling process. In the more likely case of turbulent air flow, the skirt will constantly move and change shape. Once the air flow ceases, the skirt will take back its initial shape by gravity.

In case of turbulent flow, the movement of the skirt can be used to clean the active surface of the sensor. To do so, the inner surface of the skirt should comprise a cleaning material, e.g., microfiber cloth or brush like material. The rubbing of the cloth against the active surface of the sensor surface during silo filling operation will then clean it.

Referring now to figure **4****,** to facilitate the twisting of the flexible pipe-like skirt **400** of the flexible skirt system **103,** fins **401** can be attached to the flexible pipe-like skirt **400** to increase rotational forces.

One or multiple fins **401** attached to the flexible pipe-like skirt **400** may increase the probability of a sealing pinch-off of the skirt by turbulent air movement.

## Claims

1. A flexible skirt system configured to prevent dust material inside a silo to contaminate a sensor mounted inside of the silo and configured to measure a fill level,
the sensor comprising at least an active surface configured to emit and receive a
signal in a field of view to measure the fill level, the sensor being mounted on or in proximity of a ceiling the silo,
**characterized in that** the flexible skirt system further comprises
a flexible pipe-like skirt attached to a basis and around the sensor and configured to
extend in direction of gravity force, configured to be deformed by an air movement around the flexible pipe-like skirt in such a way that the flexible pipe-like skirt is folded or pinched off by twisting or folding, thus preventing an ingress of the dust material into the flexible pipe-like skirt thereby preventing contamination of the active surface.

2. The flexible skirt system of claim 1, further comprising
a rigid lamp shade-like cover which on one of its extremities is fixed to the sensor
and on the opposite one of its extremities carries the flexible pipe-like skirt of the flexible skirt system, thereby tensioning the flexible pipe-like skirt to remain open like a tunnel.

3. The flexible skirt system of any one of claims 1 and 2, wherein
the flexible pipe-like skirt comprises a skirt material that is configured to be flexible
and to form the flexible pipe-like skirt as anyone of the list comprising a cylinder, any closed geometrical shape, a set of overlapping strips.

4. The flexible skirt system of any one of claims 1 to 3, further comprising
a weight fixed towards the extremity away from the sensor of the flexible pipe-like
skirt and configured to assure that the flexible pipe-like skirt takes back the original unfolded and un-pinched shape in the absence of any air movement.

5. The flexible skirt system of any one of claims 1 to 4, wherein
a cross-section of the flexible pipe-like skirt may be any one of the list comprising
cylindrical, conical, mushroom shaped, a more complex 3D shape.

6. The flexible skirt system of any one of claims 1 to 5, wherein
the flexible pipe-like skirt comprises at least a fin on its outer periphery, the at least
one fin configured to increase a probability of a sealing pinch-off of the flexible pipe-like skirt by turbulent air movement.

7. The flexible skirt system of any one of claims 1 to 6, wherein
the flexible pipe-like skirt comprises on an inner side of the skirt a cleaning material
configured to exert a cleaning effect, meaning once bent in contact with the active surface of the sensor by an air turbulence it removes already attached dust material.
